# EUROPEAN PATENT APPLICATION

(11) **EP 2 907 594 A1**
(43) Date of publication of application: **19.08.2015**
(21) Application number: 15155480.5
(22) Date of filing: 17.02.2015
(51) Int. Cl.: B09B 3/00, C22B 7/04, B29C 45/00, B29C 47/00

(54) **Polymeric matrix composite material and production process therefor**

(30) Priority: 18.02.2014 IT BS20140045
(71) Applicant: ASO Siderurgica S.p.A., 25035 Ospitaletto (BS) (IT)
(72) Inventor: Ramorino, Giorgio, 25035 Ospitaletto (BS) (IT); Svanera, Massimo, 25035 Ospitaletto (BS) (IT); Cornacchia, Giovanna, 25035 Ospitaletto (BS) (IT); Gelfi, Marcello, 25035 Ospitaletto (BS) (IT); Roberti, Roberto, 25035 Ospitaletto (BS) (IT)
(74) Representative: Pes, Matteo

(57) **Abstract**

It is described a process for the production of a polymeric matrix composite material suitable for the manufacture of articles and coatings for the building field and objects in general, also style objects, obtainable by moulding or pouring. The process provides to extrude slags of iron-and-steel processes, in particular slags from electric furnace, with a thermoplastic material, to obtain granules of composite material in which the slags are dispersed in a thermoplastic matrix. Alternatively, the method provides to mix the slags with a thermosetting material and to pour, or spread, the mixture in a mould, to obtain the finished manufactured article of composite material in which the slags are dispersed in a thermosetting matrix.

## Description

### Field of the invention

The present invention relates to a polymer matrix material usable in various fields, mainly in the building construction, and furniture and object manufacture fields, and a method for preparing such a material. In particular, the invention relates to a polymer matrix material comprising electric-furnace slag, i.e. slag from iron-and-steel processes.

### State of the art

In building construction and furniture manufacturing fields the composite materials have various applications, in structural elements as well as in coatings, in doors, windows and shutters, in furnishings, etc. The most popular materials contain fibers of glass and carbon, metals or metal alloys such as steel, aluminium, titanium, and more frequently resins or other polymeric matrices, etc. The features making them suitable for different uses are dimensional stability, lightness, strength, low flammability, and versatility referring to shapes.

For example, *Du Pont* Company commercializes a composite material, with trademark *Corian*, composed by two third of aluminium hydroxide (trihydrate) and one third of acrylic resin (polymethylmethacrylate), and possibly pigmented. Furniture and architectural surfaces are made with Corian - also having great size - in residential and commercial environments, from hotels to hospitals, from shops to yachts, from catering industries to airports. Corian can be cut, milled or worked such as wood, and modelled, thermoformed or inlaid. A very popular application of Corian is the implementation of kitchen counter tops.

*Alcoa* Company makes coating elements for building facades obtained by sandwiching two aluminium foils with a polyethylene core.

Generally, known solutions imply the use of expensive raw materials. Constituents of a lot of polymeric matrix composite materials, for example thermoplastic or thermosetting materials, and other fillers, such as for example metals, glass fibers, etc., must be purchased as raw materials at market prices.

Also productive processes, allowing to obtain building or furniture elements, etc., from composite materials, are often expensive.

In view of what above, having a composite material that is versatile, inexpensive and easy to work is desirable.

### Summary of the invention

Object of the present invention is therefore to provide a composite material being an effective alternative to now available solutions, in particular a material as much as possible inexpensive and easy to work, and a process for the production thereof.

Therefore, in its first aspect the present invention concerns a process according to claim 1 for the production of a polymeric matrix composite material suitable for the manufacture of objects in moulds.

In particular, the process comprises the steps of:
a) extruding an electric-furnace powdery slag along with granules of a thermoplastic material in proportions corresponding to 10% - 70% by mass of slag and 30% - 90% by mass of thermoplastic material with respect to the total of the composite material product;
b) cutting the extrudate of composite material into granules, so that it can be extruded and injected into a mould;
   or else, as an alternative to steps a) and b):
c) premixing a thermosetting material with granules of electric-furnace slag in a proportion of up to 90% by mass with respect to the total of the composite material product, and mixing the slag with the thermosetting material together with the respective catalyst in order to initiate the polymerization reaction and, before the mixture cures, mixing again;
d) pouring the resulting mixture into a mould, waiting for the mixture to cure, and extracting the finished product from the mould.

The production process according to the present invention allows a composite material of slag from iron-and-steel processes to be produced in a polymeric matrix that can be constituted by a thermoplastic material or a thermosetting material.

The process is simple to be implemented through equipments and plants known in the art and now well-tested. In case in which the thermoplastic matrix is used, slag and thermoplastic material are mixed through an extrusion process and then extruded in order to achieve granules to be subsequently used for injection molding/extrusion so that to have manufactured articles. In case in which a thermosetting matrix is used, slag and thermosetting material are poured in a mould as pre-mixed.

In addition to simplicity, the production process has another important advantage: the low cost of raw materials. Electric-furnace slags now are a scrap of steel production process and, therefore, a cost for the landfill disposal. Then the use of electric-furnace slags allows reducing production costs with respect to what can be found in composite materials, which are exclusively polymeric materials, or in composite materials based on polymers and filled with materials not being scraps of other processes.

In this point of view, it has to be noticed that the thermoplastic material usable in the production process can be in turn a recycled material.

Moreover, the production process can be considered as eco-sustainable, as it provides for the use of slags from scrap that, on the contrary, should be disposed of.

Preferably, the electric-furnace slags comprise a mixture of oxides, among which the most import is the iron oxide, according to Euroslag standard (www.euroslag.com).

Preferably, the electric-furnace slag used during step a) has a particle size less than 300 µm, and more preferably less than 80 µm; and, on the other hand, the electric-furnace slag used during step c) has a particle size less than 5 mm, i.e. they can have greater size.

For example, thermoplastic materials adapted for implementing the production process are polypropylene PP, polyethylene PE, polyvinyl chloride PVC, and some adapted thermosetting materials are acrylic resin, styrene resin, epoxy resin, polyurethane.

Preferably, the production process does not provide for the use of additives. However, in some case it is possible to provide the use of additives such as, for example, metal oxides, glass powder, pigments, etc., in order to achieve specific aesthetic effects in the composite material or other specific features for the desired use.

In its second aspect the present invention relates to a polymeric matrix composite material according to claim 7.

In particular the composite material suitable for the manufacture of objects in moulds, comprises either:
- an electric-furnace slag dispersed in a matrix of a thermoplastic material, in proportions comprised from 10% to 70% by mass of slag and 30% - 90% by mass of thermoplastic material with respect to the total of the composite material; or else
- an electric-furnace slag dispersed in a matrix of a thermosetting material, wherein the electric-furnace slag constitute up to 90% by mass with respect to the total of the composite material.

The material according to the present invention is particularly versatile. Laboratory tests demonstrated that, with this material, it is possible to obtain coating materials for building field, for example tiles, panels, slabs, etc., working surfaces, for example counter tops or tables, frames, frameworks for passages or objects of different nature, substantially every shape obtainable through moulding techniques.

The composite material is therefore easy to manufacture, both when it is obtained through extrusion and when it is obtained during pouring in the thermosetting matrix. Conventional extrusion and pouring plants are not necessarily modified for the production of this material. Furthermore, the composite material proved to be easy to work through conventional chip removal operations (it can be drilled and milled, etc.) as the wood.

In line with what mentioned in relation to the production process, the composite material is relatively inexpensive as it is mostly obtained by using scraps of the iron-and-steel process at the electric furnace, which can be purchased at lower prices. Furthermore, it has to be considered that also the thermoplastic material can be in turn recycled from wastes.

Broadly speaking, the composition of electric-furnace slag is similar to that of volcanic rocks having a lot of iron oxides. Also for this reason, de facto the composite material of the present invention can be considered as eco-friendly (life cycle).

Preferably, the electric-furnace slag dispersed in the matrix of thermoplastic material has a particle size less than 300 µm, preferably less than 80 µm, and the electric-furnace slag dispersed in the matrix of thermosetting material has a particle size less than 5 mm.

Preferably, the thermoplastic material is selected from polypropylene PP, polyethylene PE, polyvinyl chloride PVC, and the thermosetting material is selected from acrylic resin, styrene resin, epoxy resin, polyurethane.

In general, the composite material is not subjected to corrosion, as granules of slag are incorporated into the thermoplastic or thermosetting matrix and not exposed to atmospheric agents.

Moreover, the composite material is slightly subjected to degradation usually caused by ultraviolet rays UV on plastic materials, or it is not subjected of all.

Ultimately, the Applicant considers this composite material as an effective alternative to now available polymeric materials used in the building field and in other industrial fields for moulding products.

### Brief list of the figures

Further characteristics and advantages of the invention will be more evident from a review of the following specification of a preferred, but not exclusive, embodiment, shown for illustration purposes only and without limitation, with the aid of the attached drawings, in which:
- figure 1 is a scheme of a first process according to the present invention;
- figure 2 is a scheme of a second process according to the present invention.

### Detailed description of the invention

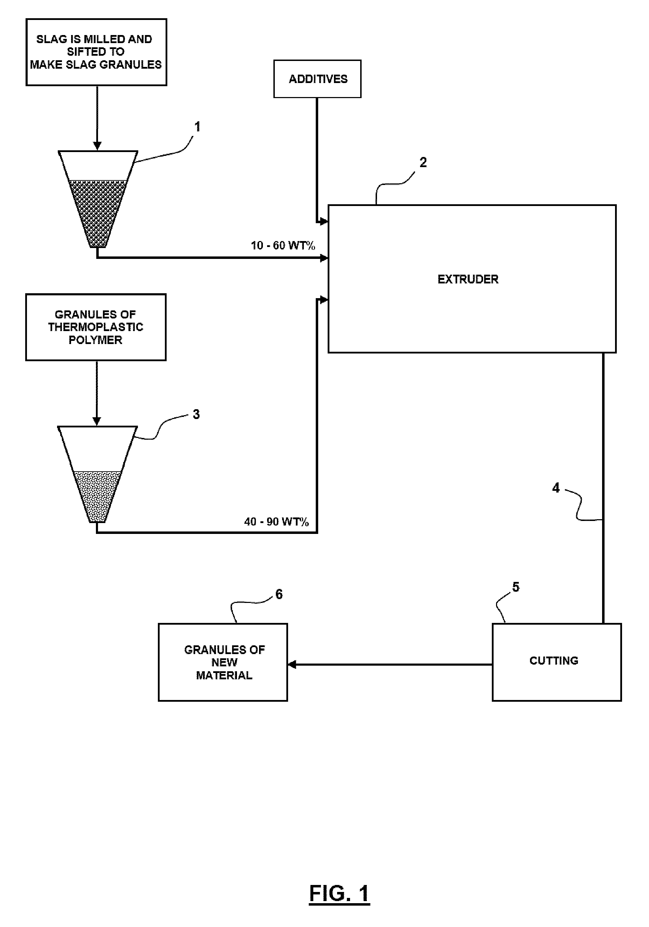

Figure 1 is a scheme relating to a first production process of a composite material according to the present invention, whose matrix is constituted by a thermoplastic material.

Slags coming from the electric furnace are collected, ground and sifted to achieve the desired particle size. In general, it is desirable that the particle size of slags is less than 300 µm and preferably less than 80 µm. Typically, slags contain metal oxides, largely of iron.

For what concerns the nature of iron slags obtained from iron-and-steel processes at the electric furnace, for the steel production, according to Euroslag standard, the summation of FeOₓ+CaO+SiO₂+Al₂O₃+MgO must be ≥ 80%.

Granules of slags are dosed in the desired percentage and fed to a first loading hopper 1 connected to an extruder 2.

The extruder 2 is further fed by a second loading hopper 3 that receives granules of a thermoplastic material that will constitute the polymeric matrix of the composite material.

For illustration purpose only, the thermoplastic material can be polypropylene PP, polyethylene PE, polyvinyl chloride OVC, etc. Among other things, the polyethylene can have low density or high density according to the desired mechanical characteristics wanted for the composite material.

Also the thermoplastic material is available as granules. The chemical producer companies commercialize these products in various particle sizes and colors. In alternative, also the thermoplastic material can be a recycled material, i.e. a scrap from other production processes.

If required, the extruder can be fed with additives through an appropriate line; alliteratively, additives can be fed together with the thermoplastic material in the loading hopper 2. Additives can be required by the purchaser of the composite material in order to obtain a specific color, or else a specific surface finish or shades, etc. Additives can be dyes, metal oxides, resins, etc., according to the use to which the composite material is intended for.

For example, if the composite material is intended for the tile production, an additive suitable for making bright aesthetic veins can be the aluminium oxide or the glass powder.

Granules of slags and thermoplastic material are fed to the extruder 2 in sized amounts so that the amount of slag is comprised in the range 10% - 70% by mass with respect to the total of the composite material product, and the amount of the thermoplastic material is comprised in the range 30% - 90% by mass with respect to the total of the composite material product.

Granules of slags and thermoplastic material are mixed and melted together in the extruder 2. The extruder produces an extrudate, i.e. a thread 4 of composite material constituting the material according to the present invention. The thread diameter 4 is variable with the diameter of the extrusion die used in the extruder 2, as well known in the art.

The thread 4 of composite material leaving the extruder 2 is air cooled or else is subjected to a cooling step with air/water forced jets.

At this point, the cooled and cured thread 4 is crushed to granules in an appropriate cutting station 5. The granules 6 are collected and packed, then they are ready for sale and use.

The granules 6, obtained as afore described, are in their turn usable in injection molding processes to form objects, for example furnishing accessory, parts of furniture, supports, etc. Moreover, the granules 6 can be in their turn extruded for producing tubular elements, coatings, etc.

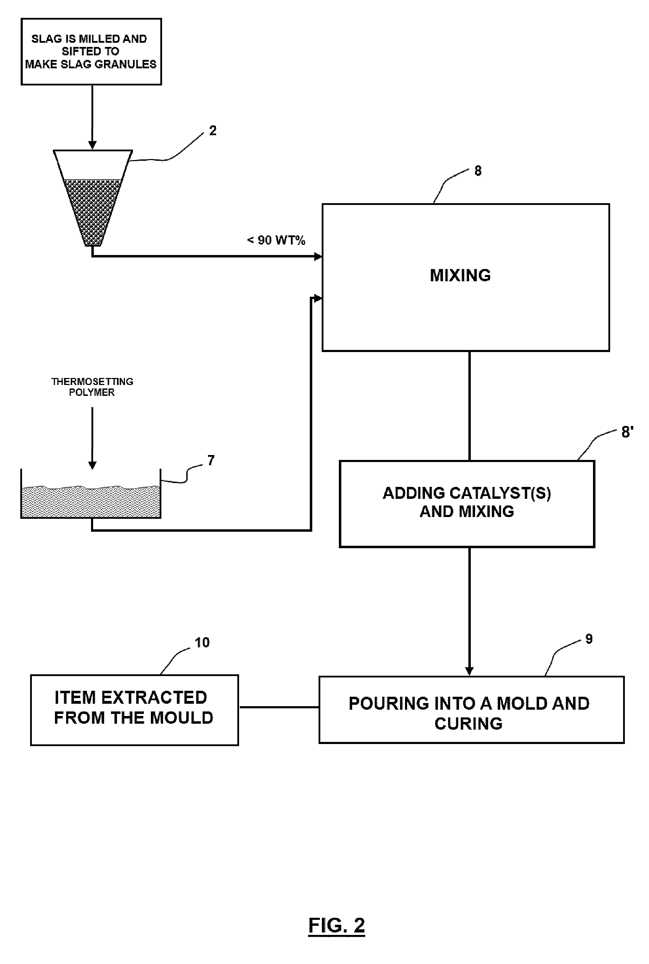

Figure 2 shows schematically a variation of the production process. In particular, this variation provides that the polymeric matrix of the composite material have a thermosetting base and not a thermoplastic base.

Also in this case, slags are collected, ground and sifted to achieve the desired particle size, lower than 5 mm.

In a pre-mixing tank 8, for example a tank provided with rotating paddles, a thermosetting material is mixed with the slags dosed by the loading hopper 2. For example, suitable thermosetting materials are acrylic resin, styrene resin, epoxy resin, polyurethane, etc. The amounts are prearranged so that the slugs are less than 90% by mass of the total of the final composite material. The mixing in the tank 8 lasts few seconds, just enough to obtain the complete mixing of the two constituents.

The catalyst (or catalysts), corresponding to the thermosetting material, is then added to the mixture obtained in the tank 8. This can be done directly in the tank 8 or in another tank 8'.

When the thermosetting material and the respective catalyst are mixed in 8', the polymerization and crosslinking reactions start and lead the material to cure in few minutes, usually in less than ten.

Possible additives can be mixed together with the slags in order to modify aesthetic/physical features of the finished product; for example, expanded polystyrene can be used.

At this point, the mixture is poured in a mould 10 and let cure by means of the crosslinking reaction. In the mould the final product is formed directly, for example a counter top, a series of tiles, furnishing accessory, style objects, a chair, etc.

The final product is then drawn out from the mould and finished, if necessary, for example polished or painted.

From this one can infer that the composite according to the present invention can have a thermoplastic or else thermosetting polymeric matrix. In both cases there are many advantages.

First of all, the slag cost is low, as it is a slag for electric furnace iron-and-steel industry, and therefore the composite material has in turn held-down production costs.

Another advantage is the high resistance against corrosion. Oxides present in the composite material remain incorporated into the polymeric matrix and therefore not exposed to atmospheric agents.

Moreover, the composite material is ferromagnetic as slags used for the production contain iron oxides.

For what concerns the mechanical properties, laboratory tests confirmed that the two-version composite material can be drilled and milled as wood does. Also self-tapping screws penetrate efficiently into the composite material of the invention.

The composite material in the version with the thermosetting material demonstrated a good resistance against heat and flames. This variation of the material can easily have the flame retardancy class V0. On the contrary, the composite material in the version with the thermoplastic material demonstrated a low resistance against heat and flames.

Laboratory tests allowed demonstrating that, in the version with the thermoplastic matrix, the composite material has a yield strength equivalent to that one ascertainable, under the same conditions, with other thermoplastic filled materials known in the art. But this result is obtained with lower production costs.

In the version with the thermosetting matrix, the composite material has mechanical properties comparable with those of ceramic materials, still being more easily workable (drilling, milling, etc.).

The composite material according to the present invention has properties shielding radio and electromagnetic waves, in general. This because of the presence of iron oxides dispersed in the matrix.

Laboratory tests have further demonstrated that the composite material has a wear resistance higher than the polymeric matrix alone, i.e. the only thermoplastic or thermosetting material that constitutes the matrix. Evidently, the presence of slags in the matrix maximizes some mechanical properties. For example, the composite material shows also hardness higher than the polymeric matrix alone.

The composite material results to be easily screen-printed and polished, these features being useful for the manufacture of style objects.

Lastly, an advantage of the composite material is that its thermoforming is easy in order to obtain manufactured articles by using casts and moulds.

## Claims

1. Process for the production of a polymeric matrix composite material suitable for the manufacture of objects in moulds, comprising the steps of:
a) extruding an electric-furnace powdery slag along with granules of a thermoplastic material in proportions corresponding to 10% - 70% by mass of electric-furnace slag and 30% - 90% by mass of thermoplastic material with respect to the total of the composite material product;
b) cutting the extrudate into granules of composite material which, in turn, can be extruded or injected into a mould;
or, as an alternative to steps a) and b):
c) premixing a thermosetting material with granules of electric-furnace slag in a proportion of up to 90% by mass with respect to the total of the composite material, and mixing the slag with the thermosetting material together with a respective catalyst in order to initiate the polymerization reaction and, before the mixture cures,
d) pouring the resulting mixture into a mould, waiting for the mixture to cure, and extracting the finished product from the mould.

2. Process according to claim 1, wherein the electric-furnace slag includes iron oxides and other oxides according to the Euroslag standards.

3. Process according to claim 1 or claim 2, wherein the electric-furnace slag used during step a) has a particle size less than 300 µm, preferably less than 80 µm, and the electric-furnace slag used during step c) has a particle size less than 5 mm.

4. Process according to any one of the preceding claims, wherein the thermoplastic material is selected from polypropylene PP, polyethylene PE, polyvinyl chloride PVC, and the thermosetting material is selected from acrylic resin, styrene resin, epoxy resin, polyurethane.

5. Process according to any one of the preceding claims, wherein additives, for example metal oxides, glass, etc., are added during steps a) and c).

6. Composite material directly obtained by the process according to any one of preceding claims 1-5.

7. Polymeric matrix composite material suitable for the manufacture of objects in moulds, comprising either:
- an electric-furnace slag dispersed in a matrix of a thermoplastic material, in proportions corresponding to 10% - 70% by mass of slag and 30% - 90% by mass of thermoplastic material with respect to the total of the composite material; or else
- an electric-furnace slag dispersed in a matrix of a thermosetting material, wherein the electric-furnace slag constitute up to 90% by mass with respect to the total of the composite material.

8. Composite material according to claim 7, wherein the composition of the slag meets the standards defined by the association EUROSLAG.

9. Composite material according to claim 7 or claim 8, further comprising additives which modify only the aesthetic appearance of the finished material/product.

10. Composite material according to any one of preceding claims 7-9, wherein the electric-furnace slag dispersed in the matrix of thermoplastic material has a particle size less than 300 µm, preferably less than 80 µm, and the electric-furnace slag dispersed in the matrix of thermosetting material has a particle size less than 5 mm.

11. Composite material according to any one of preceding claims 7-10, wherein the thermoplastic material is preferably selected from polypropylene PP, polyethylene PE, polyvinyl chloride PVC, and the thermosetting material is preferably selected from acrylic resin, styrene resin, epoxy resin, polyurethane.
